# EUROPEAN PATENT SPECIFICATION

(11) **EP 1 156 699 B1**
(45) Date of publication and mention of the grant of the patent: **10.11.2004**
(21) Application number: 01111180.4
(22) Date of filing: 11.05.2001
(51) Int. Cl.: H04R 1/02

(54) **Enclosure for spatially orientable speakers**
Lautsprecherbox für raümlich ausrichtbaren Lautsprecher
Enceinte pour haut-parleurs orientables spatialement

(30) Priority: 16.05.2000 IT BO000073
(43) Date of publication of application: 21.11.2001
(73) Proprietor: Elettronica Montarbo S.r.l., 40057 Cadriano di Granarolo Emilia (IT)
(72) Inventor: Montanari, Maurizio, 40033 Casalecchio di Reno (Prov.Bologna) (IT)
(74) Representative: Modiano, Guido, Dr.-Ing.

(56) References cited:
- US-A- 4 101 109
- US-A- 4 227 669
- US-A- 4 417 714

## Description

The present invention relates to a box-like enclosure for spatially orientable speakers.

It is known that speaker cases or boxes are currently commercially available which have various kinds of element for engaging the ends of anchoring cables in order to allow the spatial placement of the speakers, particularly in showrooms or outdoor.

These kinds of element are usually constituted by one or more elements, which are rigidly connected to each other and then associated with one end of the suspension cables. They further provide for the addition, to the suspension box, of at least one element which is fixed by means of screws to the outer surface of said box.

This assembly often requires additional machining in order to form the seats in the box which accommodate said elements.

In particular, it has been found that the engagement elements that are currently used constitute a problem, since often damages at the frame region surrounding the engagement element occurs, owing to the stresses to which such region is subjected during suspension generated by the tension in the anchoring cables.

Moreover, the machining and the consequent additional assembly of the elements increase the times for manufacturing the speaker, thereby affecting the final cost of the product.

The aim of the present invention is to obviate the cited drawbacks by providing a box-like enclosure for spatially orientable speakers which solves the above noted problems, eliminating the need for additional mechanical elements and additional assembly operations.

Within this aim, an object of the present invention is to provide a structure which is simple, relatively easy to provide in practice, safe in use, effective in operation and relatively low in cost.

This aim and these and other objects which will become better apparent form the following description are achieved by the present box-like enclosure for spatially orientable speakers, characterized in that it has a plurality of engagement elements formed by molding said enclosure in its peripheral region, said engagement elements being engaged by ends of anchoring cables in order to allow any spatial orientation of said enclosure.

Further characteristics and advantages of the present invention will become better apparent from the detailed description of preferred but not exclusive embodiments of a box-like enclosure for spatially orientable speakers, according to the invention, illustrated only by way of non-limitative example in the accompanying drawings, wherein:
Figure 1 is a perspective view of a first embodiment of the enclosure;
Figure 2 is a front view thereof;
Figure 3 is a top view thereof;
Figures 4, 5, 6 and 7 are views of operating positions of the box-like enclosure of Fig. 1;
Figures 8, 9 and 10 are a perspective view, a plan view, and a front view, respectively, of a second embodiment of said enclosure;
Figures 11, 12 and 13 are a perspective view, a plan view and a front view, respectively, of a third embodiment of said enclosure;
Figures 14, 15 and 16 are a perspective view, a plan view and a front view, respectively, of a fourth embodiment of said enclosure;
Figures 17, 18 and 19 are a perspective view, a plan view and a front view, respectively, of a fifth embodiment of said enclosure;
Figures 20 and 20a are views of a sixth embodiment of said box-like enclosure, in which said engagement elements are made of a different material with respect to said enclosure and are intimately integrated therein during molding;
Figure 21 is an enlarged-scale view of said engagement element, intimately integrated at one of the corners of said enclosure;
Figure 22 is a sectional view, taken along the plane XII-XII of Figure 21;
Figures 23 and 24 are a perspective view and an exploded front view, respectively, of a seventh embodiment of said enclosure.

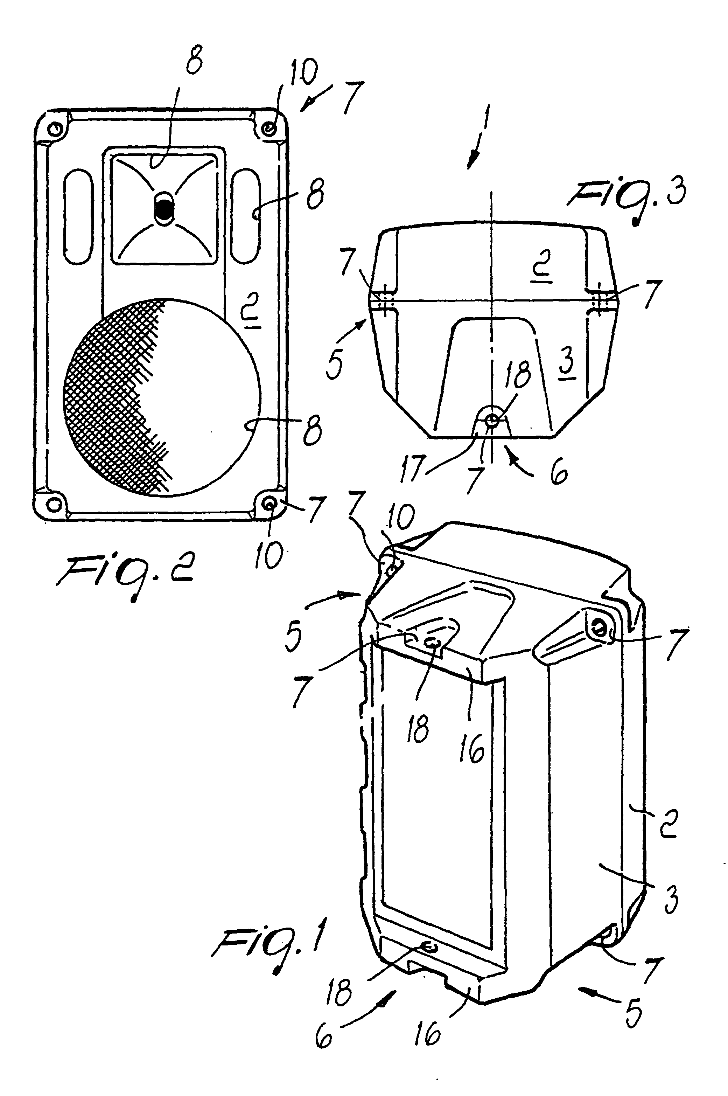

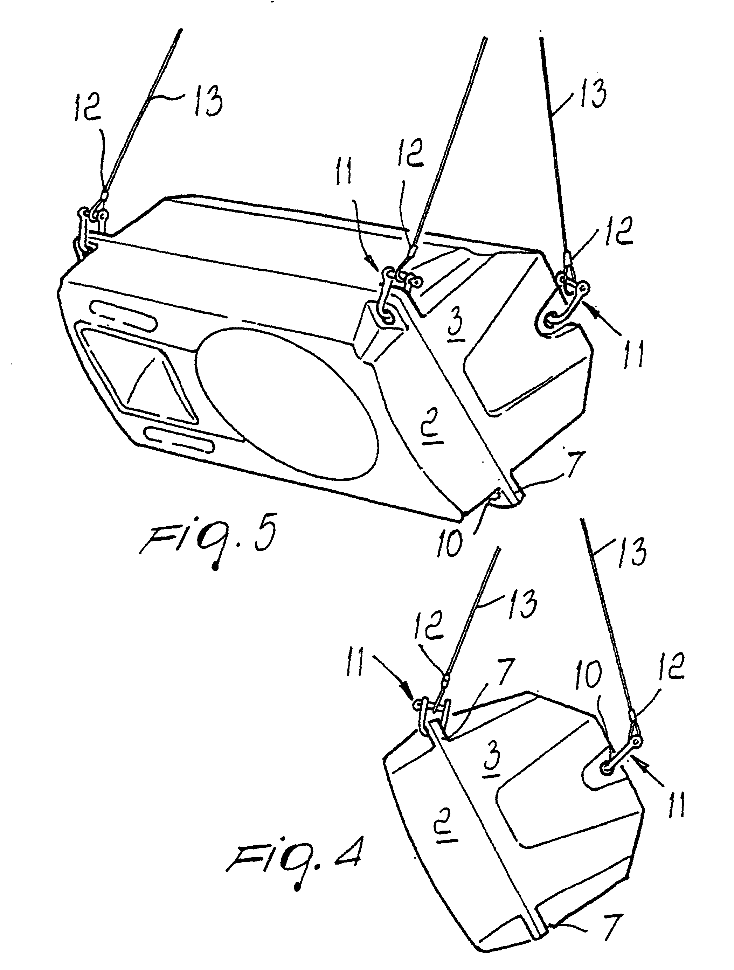

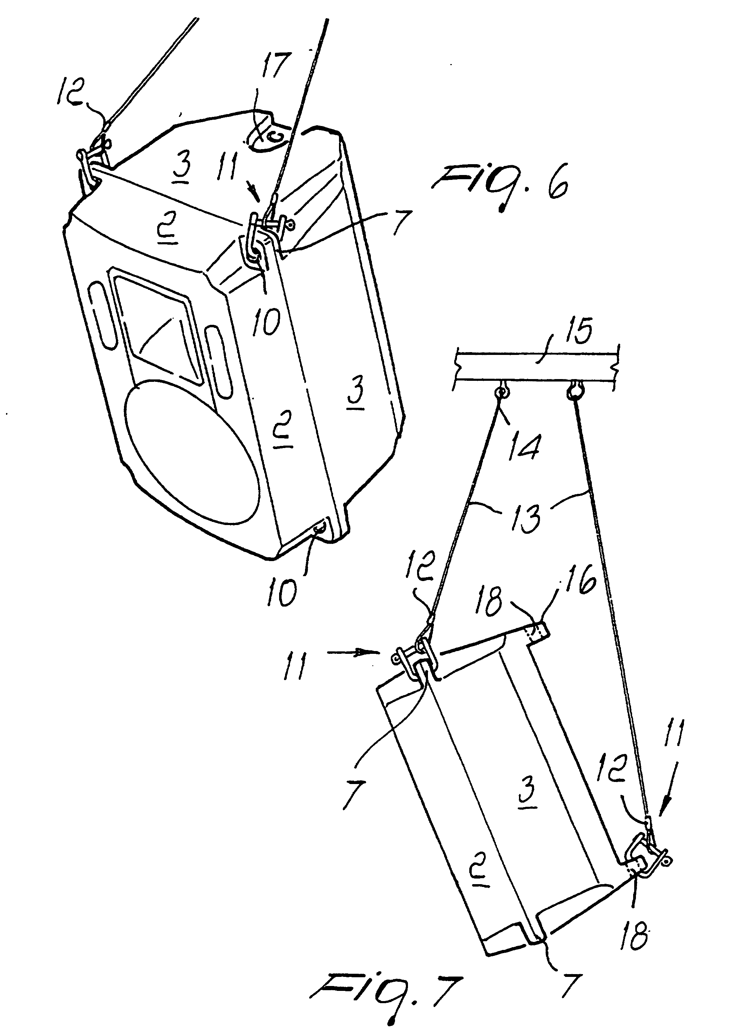

With reference to the figures, the reference numeral 1 generally designates a box-like enclosure for speakers according to a first embodiment of the invention. The box-like enclosure 1 made of plastics is substantially a prism-shaped monolithic body formed during molding and is internally provided with a cavity in which acoustic means are accommodated. The box-like enclosure 1 further defines a front portion 2 and a rear portion 3. The box-like enclosure 1 has engagement elements 7 on its outer peripheral region, at the lateral sharp edges 5 and at the rear sharp edges 6, as shown in Figures 1 to 7; said engagement elements are formed during molding. The front portion 2 is provided with openings 8 which are formed at the output cone, by way of which the acoustic means radiate sound.

The engagement elements 7 at the lateral sharp edges 5 form lugs which are crossed by holes 10. The holes 10 can be engaged with hooks 11, which are constituted for example by shackles, which are connected to one end 12 of anchoring cables 13 whose other end 14 is coupled to fixed parts 15. Likewise, the engagement elements 7, at the rear sharp edges 6, form a protrusion 16 which has, in its central region, a recess 17 which is crossed by a hole 18. The hole 18, like the hole 10, can be engagd by means of the hooks 11.

It is also possible to form engagement elements 7 during molding on each face of the box-like enclosure 1.

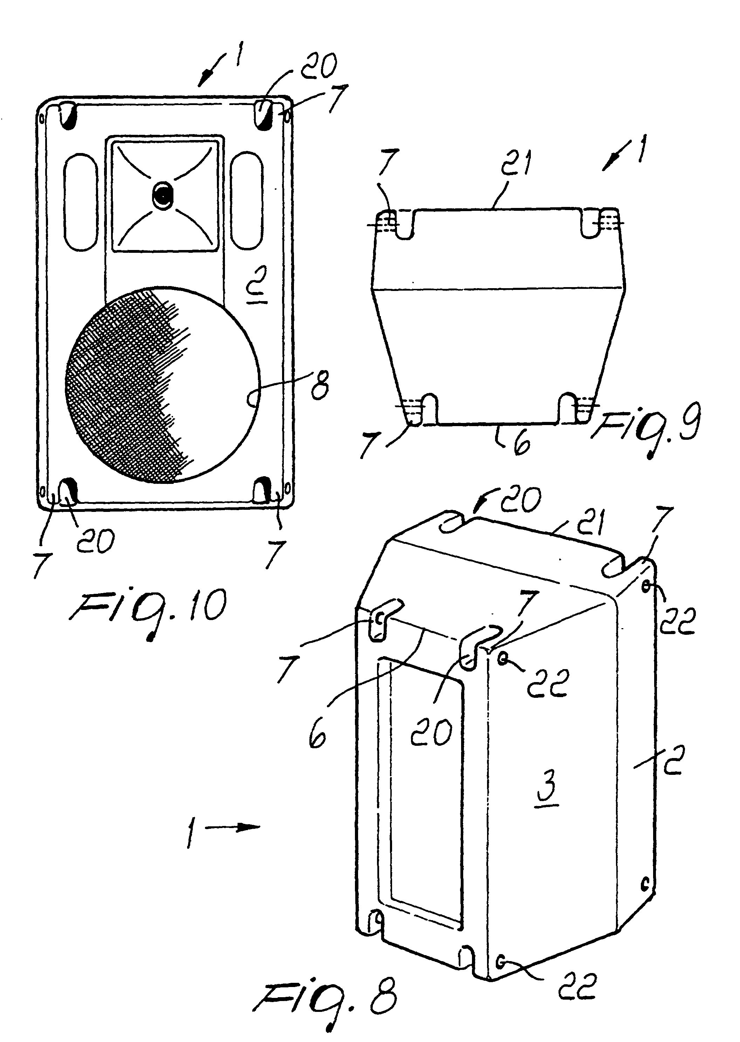

A second embodiment of the box-like enclosure 1 for speakers, according to the invention, is shown in Figures 8 to 10. In this second embodiment, the engagement elements 7 are formed by hollows 20 provided during molding at the rear sharp edges 6 and at the front sharp edges 21. The engagement elements 7, together with the hollows 20, form lugs which are crossed by holes 22 which are engaged by the hooks 11.

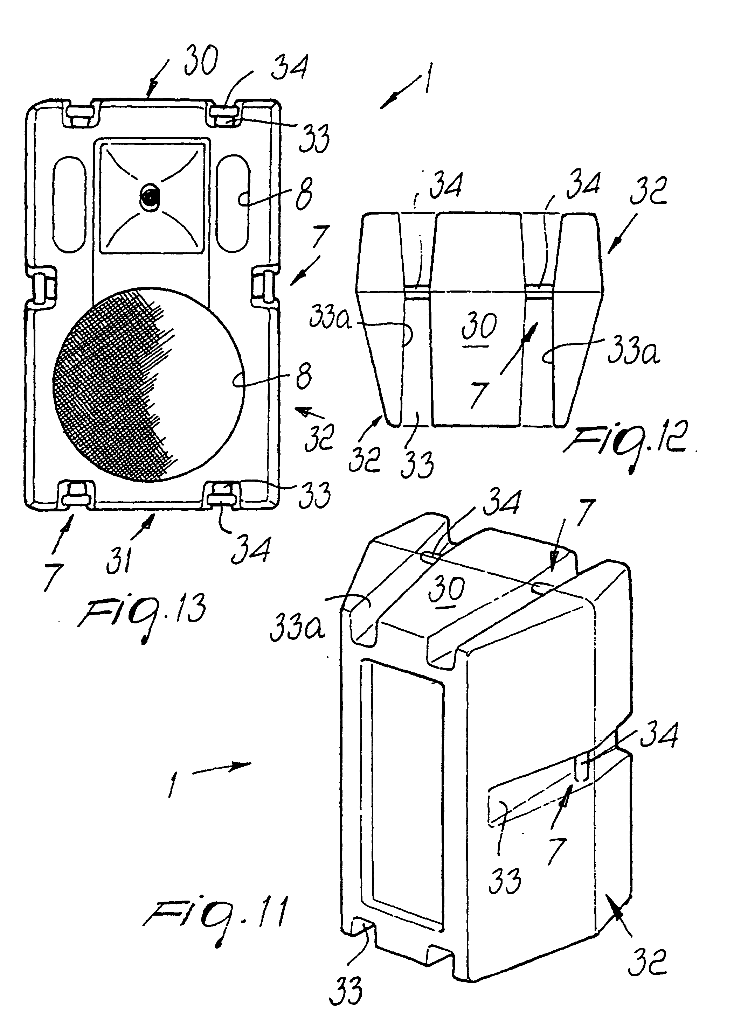

A third embodiment of the box-like enclosure 1 according to the invention is shown in Figures 11 to 13. In this embodiment, two substantially parallel slots 33 are formed by molding at the upper face 30 and at the lower face 31 and run along the entire length of said faces 30 and 31; at the central region of the lateral faces 32, another slot 33 is formed which runs along the entire length of each one of the faces 32. Proximate to the central region of each one of the slots 33 there is a bridge 34 which connects the walls 33a of the slot 33 so as to form respective engagement elements 7 which are engaged by the hooks 11 in order to allow the optimum spatial arrangement of the box-like enclosure 1.

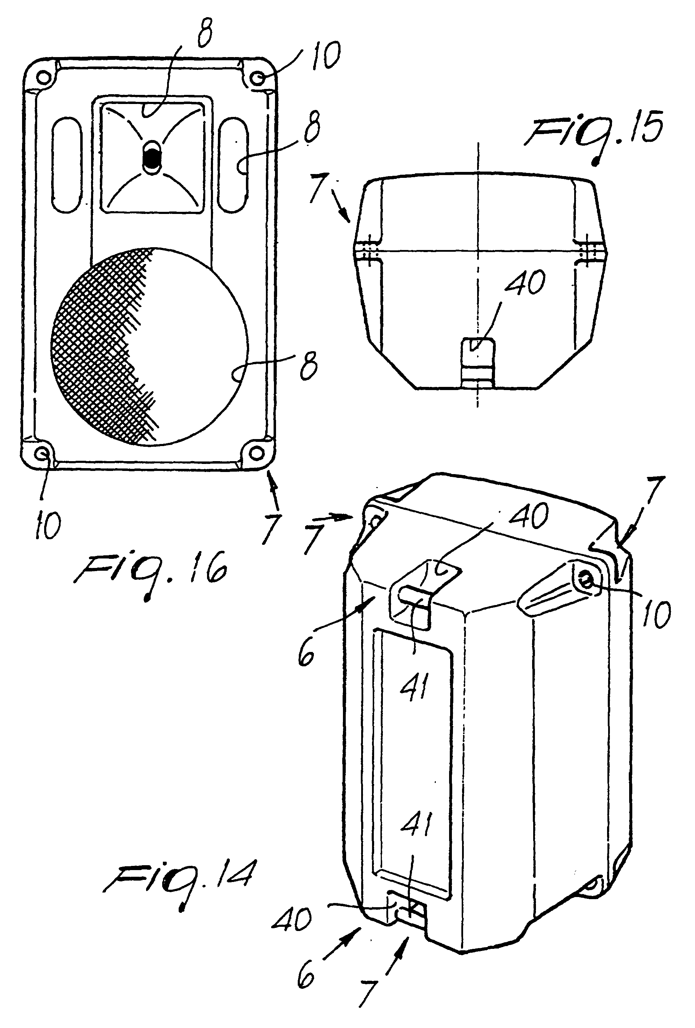

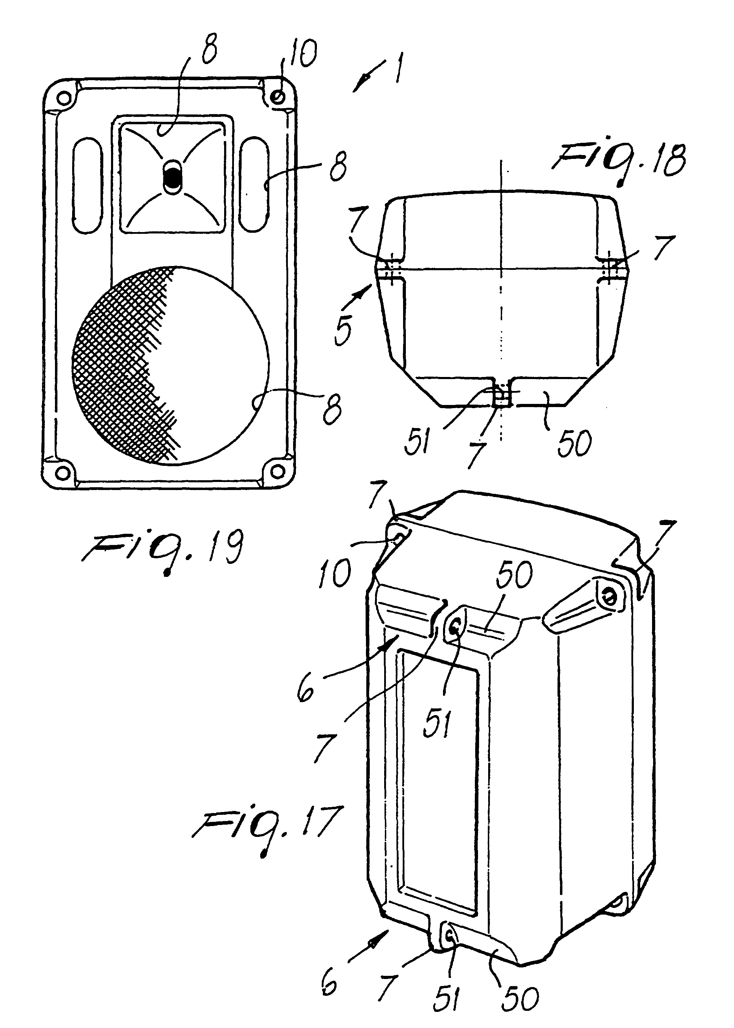

A fourth embodiment of the box-like enclosure 1 is illustrated in Figures 14 to 16. This embodiment differs from the one shown in Figures 1 to 7 in that at the central region of the rear sharp edges 6 the engagement elements 7 are formed, during molding, by indentations 40 whose walls are joined by rods 41.

A fifth embodiment of the invention is illustrated, in Figures 17 to 19. In this embodiment there is, at the rear sharp edge 6, a recess 50 from which there protrudes, proximate to the central region, the engagement element 7, which forms a lug provided with a hole 51 meant to be engaged by the hooks 11.

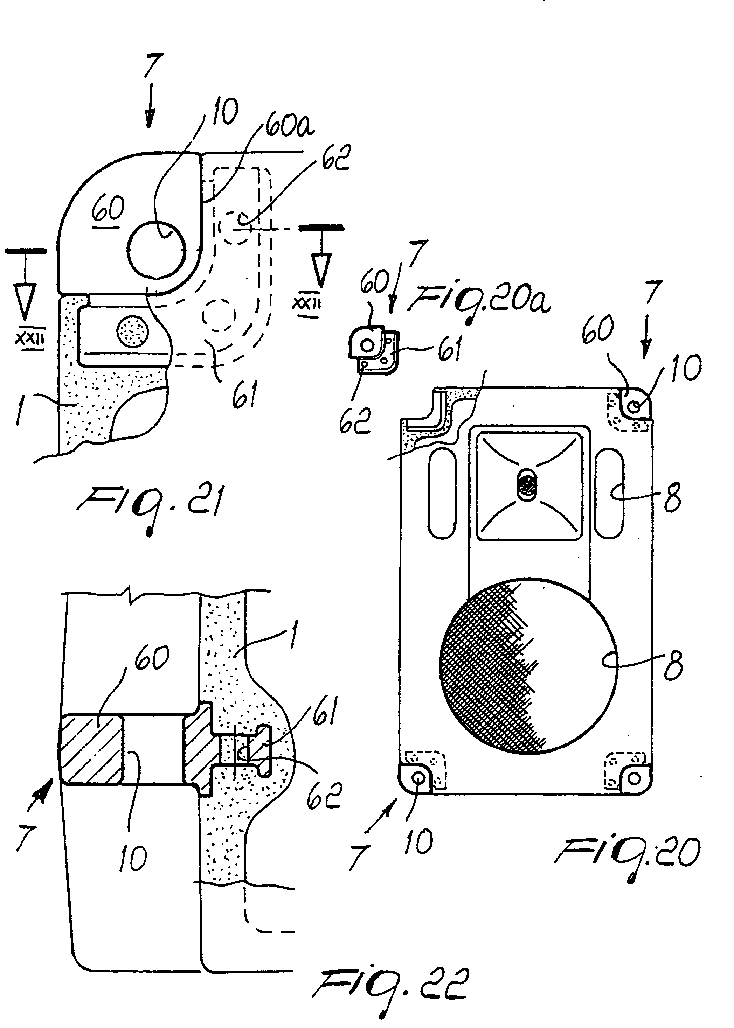

A sixth embodiment of the invention is illustrated in Figures 20 to 22. In this embodiment, the engagement elements 7 consist of lugs 60, preferably made of metallic material, which are crossed centrally by a hole 10 which is meant to engage the hooks 11; a lamina 61 provided with holes 62 is rigidly coupled to each one of the lugs 60, along the peripheral portion 60a; during the molding of the box-like enclosure 1, said lamina is intimately integrated in the sharp edges.

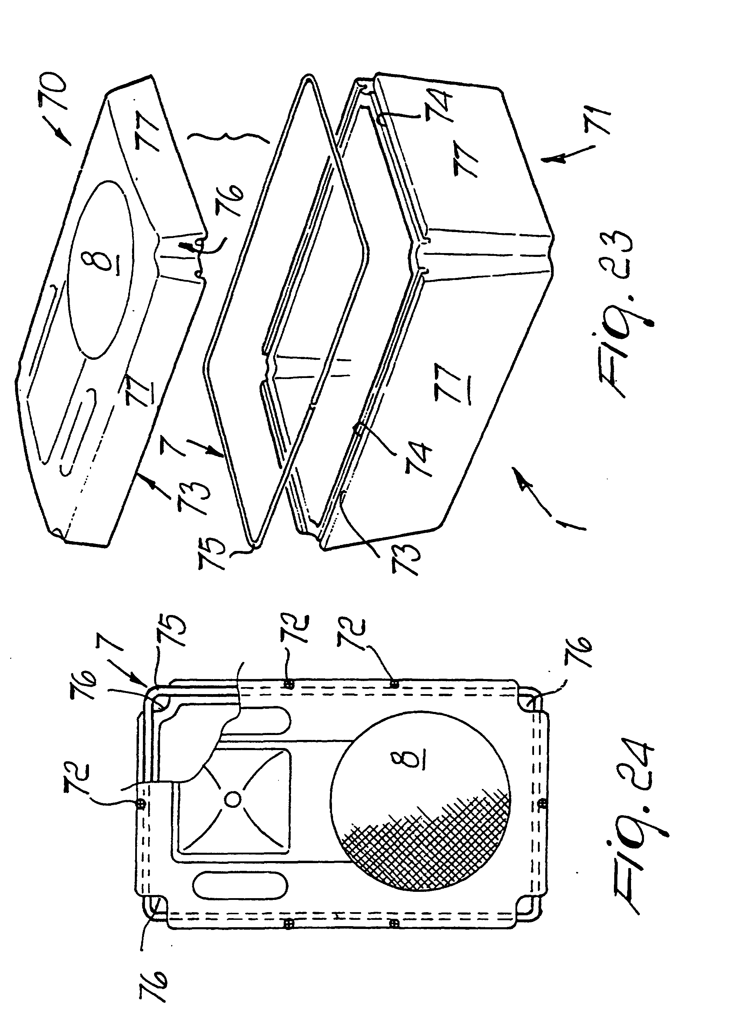

A seventh embodiment is shown in Figures 23 and 24. In this embodiment, the box-like enclosure 1 comprises a front cover 70 and a rear cover 71 which, thanks to connecting means constituted by screws 72, are coupled along front complementary peripheral edges 73, thus determining the prism-like shape of the box-like enclosure 1. The peripheral edges 73 are provided with perimetric seats which are constituted by slots 74 which accommodate the engagement elements 7. The engagement elements 7 consist of a frame protruding with the rounded portions 75 thereof, from recesses 76 formed on the converging regions of the adjacent lateral faces 77. Said rounded portions are meant to engage the hooks 11.

In practical operation, the engagement elements 7 are engaged by the anchoring cables 13 so as to allow the optimum spatial orientation of the box-like enclosure 1 for speakers.

An advantage of the present invention is that the engagement elements are formed during molding according to the most disparate requirements, so as to meet the various possibilities of positioning and suspension in space.

It has thus been shown that the invention achieves the intended aim and objects.

The invention thus conceived is susceptible of numerous modifications and variations, all of which are within the scope of the appended claims.

All the details may further be replaced with other technically equivalent elements.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A box-like enclosure for spatially orientable speakers, **characterized in that** it has a plurality of engagement elements (7) formed during the molding of said enclosure (1) of its peripheral region, said engagement elements (7) being engagable by ends (12) of anchoring cables (13) in order to allow any spatial orientation of said enclosure (1).

2. A box-like enclosure for spatially orientable speakers, **characterized in that** it has a plurality of engagement elements (7) which are intimately integrated during the molding of said enclosure (1) in the peripheral region of said enclosure (1), said engagement elements (7) being engagable by ends (12) of anchoring cables (13) to allow any spatial orientation of said enclosure (1).

3. A box-like enclosure for spatially orientable speakers, comprising a front cover (70) and a rear cover (71) which are mutually coupled in opposition along front complementary peripheral edges by way of connecting means (72), **characterized in that** the front cover (70) and the rear cover (71) have recesses (76) at their lateral faces and **in that** said peripheral edges (73) have perimetric seats (74) which accommodate engagement elements (7) which are fixed in said seats upon coupling of said covers (70,71) and protrude, from said recesses (76), such that they are engagable by ends (12) of anchoring cables (13) in order to allow any spatial orientation of said enclosure (1).

4. The enclosure according to claim 3, **characterized in that** said perimetric seats consist of a slot (74) formed along said peripheral edges (73).

5. The enclosure according to claim 4, **characterized in that** said engagement elements (7) consist of a frame which is accommodated in said slot (74).

6. The enclosure according to claims 1 or 2, **characterized in that** it is a monolithic body (1) produced by molding which forms an internal cavity for accommodating acoustic means.

7. The enclosure according to claims 1 or 2, **characterized in that** it is constituted by a front cover (2) and a rear cover (3).

8. The enclosure according to any of claims 3, 4, 5 or 7, **characterized in that** said front cover (2) is provided with openings (8) for radiating sound.

9. The enclosure according to claim 2, **characterized in that** said engagement elements (7) are made of metallic material.

10. The enclosure according to one or more of the preceding claims, **characterized in that** said enclosure (1) is made of plastic or metallic material.

## Patentansprüche

1. Ein kastenförmiges Gehäuse für räumlich ausrichtbare Lautsprecher, **dadurch gekennzeichnet, dass** es in seinem Umfangsbereich eine Vielzahl von beim Gießen des besagten Gehäuses (1) gebildeten Eingriffselementen (7) aufweist, mit denen Enden (12) von Befestigungsseilen (13) zusammenwirken können, um jegliche räumliche Ausrichtung des besagten Gehäuses (1) zu erlauben.

2. Ein kastenförmiges Gehäuse für räumlich ausrichtbare Lautsprecher, **dadurch gekennzeichnet, dass** es im Umfangsbereich des besagten Gehäuses (1) eine Vielzahl von beim Gießen des besagten Gehäuses (1) in inniger Verbindung darin eingebrachten Eingriffselementen (7) aufweist, mit denen Enden (12) von Befestigungsseilen (13) zusammenwirken können, um jegliche räumliche Ausrichtung des besagten Gehäuses (1) zu erlauben.

3. Ein kastenförmiges Gehäuse für räumlich ausrichtbare Lautsprecher, mit einer vorderen Abdeckung (70) und einer hinteren Abdeckung (71), die miteinander entlang vorderen, komplementären Umfangskanten durch Verbindungsmittel (72) verbunden sind, **dadurch gekennzeichnet, dass** die vordere Abdeckung (70) und die hintere Abdeckung (71) an ihren Seitenflächen Vertiefungen (76) aufweisen, und dass die besagten Umfangskanten (73) Sitzpartien (74) auf dem Umfang aufweisen, welche die Eingriffselemente (7) aufnehmen, die in den besagten Sitzpartien beim Verbinden der besagten Abdeckungen (70, 71) befestigt werden und an den besagten Vertiefungen (76) überstehen, so dass sie mit den Enden (12) der Befestigungsseile (13) zusammenwirken können, um jegliche räumliche Ausrichtung des besagten Gehäuses (1) zu erlauben.

4. Das Gehäuse nach Anspruch 3, **dadurch gekennzeichnet, dass** die Sitzpartien auf dem Umfang aus einem entlang den besagten Umfangskanten (73) gebildeten Schlitz (74) bestehen.

5. Das Gehäuse nach Anspruch 4, **dadurch gekennzeichnet, dass** die besagten Eingriffselemente (7) aus einem Rahmen bestehen, der in dem besagten Schlitz (74) aufgenommen ist.

6. Das Gehäuse nach Anspruch 1 oder 2, **dadurch gekennzeichnet, dass** es ein durch Gießen hergestellter einstückiger Körper (1) ist, der einen inneren Hohlraum zum Aufnehmen von akustischen Mitteln bildet.

7. Das Gehäuse nach Anspruch 1 oder 2, **dadurch gekennzeichnet, dass** es aus einer vorderen Abdeckung (2) und einer hinteren Abdeckung (3) besteht.

8. Das Gehäuse nach einem der Ansprüche 3, 4, 5 oder 7, **dadurch gekennzeichnet, dass** die besagte vordere Abdeckung (2) mit Öffnungen (8) zum Abstrahlen von Ton versehen ist.

9. Das Gehäuse nach Anspruch 2, **dadurch gekennzeichnet, dass** die besagten Eingriffselemente (7) aus Metall bestehen.

10. Gehäuse nach einem oder mehreren der vorhergehenden Ansprüche, **dadurch gekennzeichnet, dass** das besagte Gehäuse (1) aus Kunststoff oder Metall besteht.

## Revendications

1. Elément analogue à un boiter pour haut-parleurs orientables dans l'espace, **caractérisé en ce qu'**il présente une pluralité d'éléments d'emprise (7) formés au cours du moulage du dit élément (1) dans sa région périphérique, les éléments d'emprise (7) pouvant être mis en prise par des extrémités (12) de câbles d'ancrage (13) de façon à permettre toute orientation dans l'espace du dit élément (1).

2. Elément analogue à un boîter pour haut-parleurs orientables dans l'espace, **caractérisé en ce qu'**il présente une pluralité d'éléments d'emprise (7) qui sont intégrés complètement au cours du moulage du dit élément (1) dans la région périphérique du dit élément (1), lesdits éléments d'emprise (7) pouvant être mis en prise par des extrémités (12) de câbles d'ancrage (13) pour permettre toute orientation dans l'espace du dit élément (1).

3. Elément analogue à un boîter pour haut-parleurs orientables dans l'espace, comprenant un couvercle avant (70) et un couvercle arrière (71) couplés l'un à l'autre de façon opposée le long des bords périphériques complémentaires avants par des moyens de connexion (72), **caractérisé en ce que** le couvercle avant (70) et le couvercle arrière (71) présentent des évidements (76) au niveau de leur faces latérales et **en ce que** lesdits bords périphériques (73) présentent des sièges périmétriques (74) qui reçoivent des éléments d'emprise (7) qui sont fixés dans lesdits sièges par couplage des dits couvercles (70, 71) et font saillie, depuis lesdits évidements (76), de telle sorte qu'ils peuvent être mis en prise par des extrémités (12) de câbles d'ancrage (13) de façon à permettre toute orientation dans l'espace du dit élément (1).

4. Elément selon la revendication 3, **caractérisé en ce que** les sièges périmétriques consistent en une fente (74) formée le long des dits bords périphériques (73).

5. Elément selon la revendication 4, **caractérisé en ce que** lesdits éléments d'emprise (7) consistent en un cadre logé dans ladite fente (74).

6. Elément selon les revendications 1 ou 2, **caractérisé en ce qu'**il comporte un corps monolithique (1) produit par moulage formant une cavité interne pour le logement de moyens acoustiques.

7. Elément selon les revendications 1 ou 2, **caractérisé en ce qu'**il est constitué d'un couvercle avant (2) et d'un couvercle arrière (3).

8. Elément selon l'une quelconque des revendications 3, 4, 5 ou 7, **caractérisé en ce que** ledit couvercle avant (2) est muni d'ouvertures (8) pour la diffusion du son.

9. Elément selon la revendication 2, **caractérisé en ce que** lesdits éléments d'emprise (7)sont faits en matière métallique.

10. Elément selon l'une ou plusieurs des revendications précédentes, **caractérisé en ce que** ledit élément (1) est fait en matière plastique ou métallique.
